# EUROPÄISCHE PATENTSCHRIFT

(11) **EP 0 730 088 B1**
(45) Veröffentlichungstag und Bekanntmachung des Hinweises auf die Patenterteilung: **01.03.2000**
(21) Anmeldenummer: 95119425.7
(22) Anmeldetag: 09.12.1995
(51) Int. Cl.: F02D 33/02, F02D 41/22

(54) **Einrichtung und Verfahren zur Fehlererkennung bei einer turboaufgeladenen Brennkraftmaschine**
Apparatus and method for fault detection in a turbocharged internal combustion engine
Dispositif et méthode de détection de panne pour moteur à combustion interne suralimenté par turbocompresseur

(30) Priorität: 28.02.1995 DE 19506846; 07.04.1995 DE 19513156
(43) Veröffentlichungstag der Anmeldung: 04.09.1996
(73) Patentinhaber: Dr.Ing.h.c. F. Porsche Aktiengesellschaft, 70435 Stuttgart (DE)
(72) Erfinder: Kerkau, Martin, D-75443 Oetisheim (DE)

(56) Entgegenhaltungen:
- DE-A- 3 101 623
- DE-A- 4 310 261
- US-A- 4 594 668
- US-A- 4 603 552
- US-A- 4 979 481
- US-A- 5 144 803

## Beschreibung

Die Erfindung betrifft eine Einrichtung und Verfahren zur Fehlererkennung bei einer turboaufgeladenen Brennkraftmaschine, die zumindest zwei Abgasstränge mit jeweils in den Abgassträngen angeordneten Abgasturboladern, einen gemeinsamen Luftmassenmesser, einen auf alle Abgasturbolader wirkenden Ladedrucksteller und einen Luftmassenregler, der durch Ansteuerung des Ladedruckstellers den Wert der Luftmasse einem Sollwert nachführt, aufweist.

Bei derartigen Brennkraftmaschinen, siehe z.B. US-A-4 594 668, tritt das Problem auf, daß z.B. durch einen defekten Abgasturbolader oder durch einen verstopften Katalysator in einem der Abgasstränge einseitig eine Regelabweichung hervorgerufen wird. Diese Fehler sind besonders kritisch, da der Luftmassenregler versucht, über den verbleibenden Abgasturbolader des freien Abgasstranges den Lufmassen-Sollwert zu erreichen. Dies kann zu kritischen Turbolader-Drehzahlen und damit zur Zerstörung desselben führen. Gleiches gilt auch für eine Luftdruckregelung und alle anderen, auf den Gesamtluftstrom einwirkenden Regelungen.

Um einen solchen Zustand zu vermeiden wird daher vorgeschlagen, zu prüfen, ob ein einseitiger Defektes in einem der Abgasstränge vorliegt und, wenn ein solcher einseitiger Defekt erkannt ist, von einer Regelung des Luftstromes auf eine Steuerung umzuschalten. Hiermit wird auf preisgünstige und einfach zu realisierende Weise die Zerstörung eines Abgasturboladers verhindert. Außerdem wird auch noch bei einem nicht mehr voll arbeitsfähigen Abgasstrang dadurch eine ausreichende Motorleistung zur Verfügung gestellt, daß der oder die verbleibenden Abgasturbolader gesteuert mit Abgas beaufschlagt werden und somit die Brennkraftmaschine auf den verbleibenden voll arbeitsfähigen Zylindern mit Aufladung betrieben werden kann.

Die Unteransprüche zeigen vorteilhafte Weiterbildungen der Erfindung. So wird vorgeschlagen, einen einseitigen Defekt zu erkennen, wenn eine einseitige Häufung von Motor-Aussetzem erkannt ist. Dieses Vorgehen ist besonders einfach anwendbar, denn die gängigen Motorsteuerungen ermitteln bereits Motor-Aussetzer, so daß nur noch das von einer Motorsteuerung gelieferte Signal ausgewertet werden muß.

Die Erfindung ist nachstehend anhand des in den Figuren dargestellten Ausführungsbeispieles näher beschrieben. Es zeigen:
- Fig. 1: eine Übersicht über eine turboaufgeladene Brennkraftmaschine und
- Fig. 2: ein Blockschaltbild eines Luftmassenreglers mit einer Fehlererkennungseinrichtung.

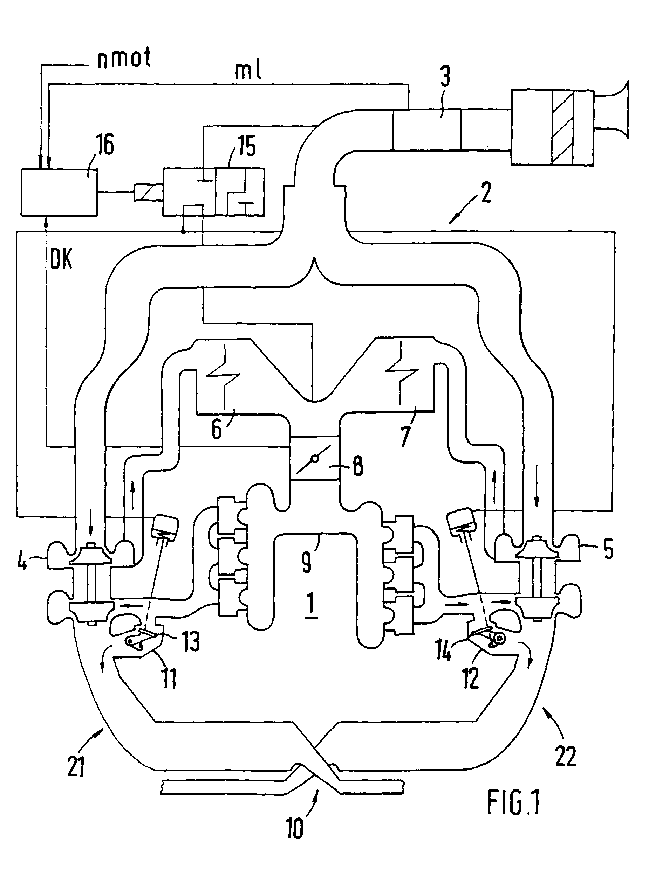

Die in Fig. 1 gezeigte Brennkraftmaschine 1 weist in einem Ansaugtrakt 2 einen Luftmassenmesser 3 auf. Hinter dem Luftmassenmesser 3 wird der Ansaugluftstrom zu einem linken Abgasturbolader 4 und einem rechten Abgasturbolader 5 geteilt. Die verdichteten Teil-Ansaugluftströme treten in getrennte Ladeluftkühler 6, 7 ein. Nach den Ladeluftkühlern 6, 7 wird die Ladeluft zusammengeführt und strömt über eine Drosselklappe 8 und einen Verteiler 9 zu Zylinderköpfen der Brennkraftmaschine 1.

In einer Abgasanlage 10 können die Abgase der Brennkraftmaschine 1 den Abgasturboladern 4,5 zugeführt werden oder über Bypassleitungen 11,12, die von Bypassventilen 13,14 verschlossen werden können, daran vorbeigeleitet werden. Die Bypassventile 13,14 sind zusammen mit den Bypassleitungen 11,12 jeweils in den Abgasturboladern 4,5 integriert. Zur Ansteuerung der Bypassventile 13,14 ist ein gemeinsames Taktventil 15 vorgesehen, das von einem Luftmassenregler 16 angesteuert wird. Zur Ansteuerung der Bypassventile 13,14 verwendet das Taktventil 15 Unterdruck, der der Ansauganlage 2 an einer Entnahmestelle vor der Drosselklappe 8 entnommen wird. Als Stellglied dient je eine Membrandose 17,18. Mit Hilfe Taktventils 15 kann der Steuerdruck auf die Membrandosen 17,18 beliebig zwischen Umgebungsdruck und dem hinter den Ladeluftkühlern 6,7 anliegenden Druck eingestellt werden. Der Steuerdruck auf die Membranfläche wirkt gegen eine Federkraft. Der Membranweg wird über ein Gestänge zum Verstellen der Bypassventile 13,14 geleitet. Die Ableitung des Bypass-Abgases erfolgt in den sich stark öffnenden Turbinenaustritts-Diffusor.

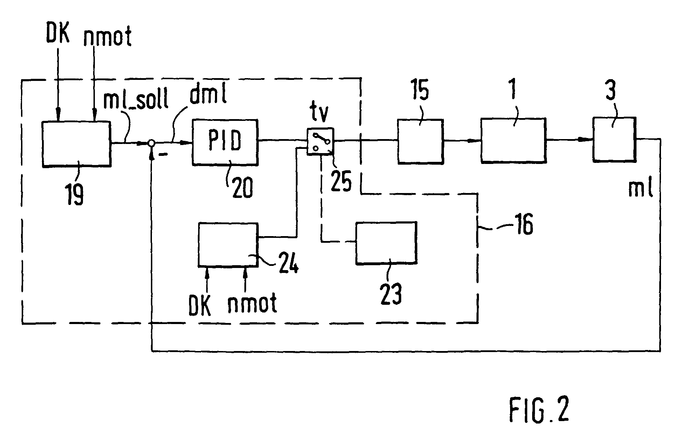

Die Luftmassenregelung ist im Blockschaltbild nach Fig. 2 dargestellt. Die Regelstrecke bildet die Brennkraftmaschine 1, an der der Luftmassenmesser 3 als Messglied den Istwert der Luftmasse ml bestimmt. Dieser wird dem Luftmassenregler 16 zugeführt und dort mit einem Sollwert für die Luftmasse ml_soll verglichen, der von einem Sollwertgeber 19 abhängig von einer Drehzahl nmot der Brennkraftmaschine 1 und einer Drosselklappenstellung DK der Drosselklappe 8 bestimmt wird. Ergebnis dieses Vergleiches ist eine Regelabweichung dml, die einem ebenfalls im Luftmassenregler 16 enthaltenen PID-Regler 20 zugeführt wird. Dieser liefert als Stellgröße ein Tastverhältnis tv an das Taktventil 15 und steuert so die als Ladedrucksteller arbeitenden Bypassventile 13,14 an.

Ein den Abgasdurchsatz vermindernder Defekt in einem der Abgasstränge, bspw. dem linken Abgasstrang 21, führt nun dazu, daß die vom Luftmassenmesser 3 registrierte Luftmasse abnimmt. Dies zieht einen Anstieg der Regelabweichung dml nach sich, und der PID-Regler 20 schließt über das Taktverhältnis tv die Bypassventile 13 und 14. Infolgedessen steigt im rechten Abgasstrang 22 die Drehzahl desrechten Abgasturboladers 5 stark an. Der duch den Defekt im linken Abgasstrang 21 verminderte Abgasdurchsatz führt dabei zu einem deutlich geringeren Anstieg der Drehzahl des linken Abgasturboladers 4.

Die Drehzahl desrechten Abgasturboladers 5 kann infolgedessen rasch in kritische Bereiche geraten und damit zur Zerstörung des Abgasturboladers 5 führen.

Um dies zu erkennen überwacht im Luftmassenregler 16 eine Fehlererkennungseinrichtung 23, ob an den einem Abgasstrang zugeordneten Zylindern der Brennkraftmaschine 1 einseitig und gehäuft Motor-Aussetzer auftreten. Hier wird die Erkenntnis verwendet, daß ein durch einen Defekt teilweise verstopfter Abgasstrang 21,22 zu Motor-Aussetzem auf der betroffenen Zylinderseite führt. Derartige Aussetzer werden von üblichen Motorsteuerungen ohnehin erkannt, so daß die Fehlererkennungseinrichtung nur noch ein von der Motorsteuerung zur Verfügung gestelltes Aussetzer-Signal hinsichtlich einer Häufung der Aussetzer auswerten muß.

Ist dies der Fall, und damit ein Fehler in einem der Abgasstränge 21,22 erkannt, wird das Taktventil 15 von einer Luftmassensteuerung 24 angesteuert, die das Tastverhältnis tv aus der Drehzahl nmot und der Drosselklappenstellung DK ermittelt. Diese Umschaltung kann, wie dargestellt, durch einen vor dem Taktventil 15 angeordneten Umschalter 25 für das Tastverhältnis tv erfolgen, der durch die Fehlererkennungseinrichtung 23 angesteuert wird. Wird die beschriebene Fehlererkennungseinrichtung 23 im Form eines Programmes in einem Steuergerät ausgeführt, so ist es selbstverständlich, daß die Umschaltung in der Weise erfolgt, daß ein Steuerungsprogramm für die Luftmasse ml bei erkanntem einseitigen Fehler nicht zu einem Unterprogramm für die Luftmassenregelung, sondern zu einem Unterprogramm für die Luftmassensteuerung verzweigt.

Ein derartiges Programm zur Fehlererkennung kann einen Fehler einseitig in einem der Abgasstränge 21,22 erkennen, indem folgende Schritte ausgeführt werden:
- Motor-Aussetzem werden, z.B. durch Abfrage eines entsprechenden Signales eines Motorsteuergerätes, erfaßt,
- die Häufigkeit von Motor-Aussetzern wird für die einzelnen Abgasstränge 21,22 bestimmt und
- wenn die Häufigkeit einen vorgegebenen Grenzwert übersteigt, wird festgestellt, daß ein Fehler einseitig in einem der Abgasstränge 21,22 vorliegt, und entsprechend eine Verzweigung zu einem Unterprogramm für die Luftmassensteuerung anstelle einer Verzweigung zu einem Unterprogramm für die Luftmassenregelung vorgenommen.

Anstelle einer Prüfung der absoluten Häufigkeit von Motor-Aussetzern kann auch ein Vergleich der Häufigkeit von Motor-Aussetzern in den einzelnen Abgassträngen 21,22 verwendet werden.

Die hier am Beispiel einer Luftmassenregelung gezeigte Fehlererkennung kann für jede andere auf den einer aufgeladenen Brennkraftmaschine zugeführten Luftstrom wirkende Regelung angewandt werden; dies gilt besonders für Ladedruckregelungen.

## Patentansprüche

1. Fehlererkennungseinrichtung (23) für eine turboaufgeladene Brennkraftmaschine (1) mit
- zumindest zwei Abgassträngen (21,22) und in den Abgassträngen (21,22) angeordneten Abgasturboladern (4,5),
- einem gemeinsamen Vorrichtung (3) zur Erfassung der zugeführten Luft (ml) als Regelgröße,
- einem auf alle Abgasturbolader (4,5) wirkenden Steller (15) für die zugeführte Luft,
- einem Regler (16) für die zugeführte Luft, der durch Ansteuerung des Stellers (15) den Wert der zugeführten Luft (ml) einem Sollwert nachführt,
- einer Steuerung (24) für die zugeführte Luft, die abhängig von Betriebsgrößen der Brennkraftmaschine (1) den Steller (15) ansteuert,
wobei die Fehlererkennungseinrichtung von einer Ansteuerung des Stellers (15) durch den Regler (16) auf eine Ansteuerung durch die Steuerung umstellt, wenn sie einen Fehler einseitig in einem der Abgasstränge (21,22) erkennt.

2. Fehlererkennungseinrichtung nach Anspruch 1, **dadurch gekennzeichnet**, daß zur Erkennung eines Fehlers in einem der Abgasstränge (21,22) das Auftreten von Aussetzem an der Brennkraftmaschine (1) überwacht wird, und ein Fehler erkannt wird, wenn Aussetzer an den einem der Abgasstränge zugeordneten Zylindern eine Häufung aufweisen.

3. Fehlererkennungseinrichtung nach Anspruch 1 oder 2, **dadurch gekennzeichnet**, daß
- die zugeführte Luft als Luftmasse (ml) bestimmt wird,
- die Vorrichtung zur Erfassung der zugeführten Luft als Luftmassenmesser (3) ausgeführt ist,
- der Steller für die zugeführte Luft als auf alle Abgasturbolader (4,5) wirkender Ladedrucksteller (15) ausgeführt ist,
- der Regler als Luftmassenregler (16) ausgeführt ist, der durch Ansteuerung des Ladedruckstellers den Wert der Luftmasse (ml) einem Sollwert nachführt und
- die Steuerung als Luftmassensteuerung (24) ausgeführt ist, die abhängig von Betriebsgrößen der Brennkraftmaschine (1) den Ladedrucksteller ansteuert,

4. Fehlererkennungseinrichtung nach Anspruch 1 oder 2, **dadurch gekennzeichnet**, daß
- die zugeführte Luft als Ladedruck bestimmt wird,
- die Vorrichtung zur Erfassung der zugeführten Luft als Ladedruckgeber ausgeführt ist,
- der Steller für die zugeführte Luft als auf alle Abgasturbolader (4,5) wirkender Ladedrucksteller (15) ausgeführt ist,
- der Regler als Ladedruckregler ausgeführt ist, der durch Ansteuerung des Ladedruckstellers den Wert des Ladedruckes einem Sollwert nachführt und
- die Steuerung als Ladedrucksteuerung ausgeführt ist, die abhängig von Betriebsgrößen der Brennkraftmaschine (1) den Ladedrucksteller ansteuert,

5. Verfahren zur Erkennung eines Fehlers in einer turboaufgeladenen Brennkraftmaschine (1)mit
- zumindest zwei Abgassträngen (21,22) und in den Abgassträngen (21,22) angeordneten Abgasturboladern (4,5), - einer gemeinsamen Vorrichtung (3) zur Erfassung der zugeführten Luft (ml) als Regelgröße,
- einem auf alle Abgasturbolader (4,5) wirkenden Steller (15) für die zugeführte Luft,
- einem Verfahren zur Regelung (16) der zugeführten Luft, das durch Ansteuerung des Stellers (15) den Wert der zugeführten Luft (ml) einem Sollwert nachführt,
- einem Verfahren zur Steuerung (24) der zugeführten Luft, das abhängig von Betriebsgrößen der Brennkraftmaschine (1) den Steller (15) ansteuert,
mit den Schritten
- Feststellen, ob ein Fehler einseitig in einem der Abgasstränge (21,22) vorliegt und
- Ermitteln des Stellwertes für die Ansteuerung des Stellers (tv) durch das Verfahren zur Regelung der zugeführten Luft, wenn kein Fehler vorliegt und
- Ermitteln des Stellwertes für die Ansteuerung des Ladedruckstellers (tv) durch das Verfahren zur Steuerung der zugeführten Luft, wenn ein Fehler vorliegt.

6. Verfahren nach Anspruch 3, **dadurch gekennzeichnet**, daß zur Feststellung, ob ein Fehler einseitig in einem der Abgasstränge (21,22) vorliegt, folgende Schritte ausgeführt werden:
- Erfassen von Motor-Aussetzern
- Bestimmen der Häufigkeit von Motor-Aussetzern an einzelnen Abgassträngen (21,22) und
- Feststellen, daß ein Fehler einseitig in einem der Abgasstränge (21,22) vorliegt, wenn die Häufigkeit einen vorgegebenen Grenzwert übersteigt.

7. Verfahren nach Anspruch 5 oder 6, **dadurch gekennzeichnet**, daß in der turboaufgeladenen Brennkraftmaschine (1)
- ein gemeinsamer Luftmassenmesser (3) als Vorrichtung zur Erfassung der zugeführten Luft, - ein auf alle Abgasturbolader (4,5) wirkenden Ladedrucksteller (15) als Steller für die zugeführte Luft,
- ein Verfahren zur Luftmassenregelung (16) als Verfahren zur Regelung der zugeführten Luft und
- ein Verfahren zur Luftmassensteuerung (24) als Verfahren zur Steuerung der zugeführten Luft vorgesehen sind.

8. Verfahren nach Anspruch 5 oder 6, **dadurch gekennzeichnet**, daß in der turboaufgeladenen Brennkraftmaschine (1)
- ein gemeinsamer Ladedruckgeber als Vorrichtung zur Erfassung der zugeführten Luft,
- ein auf alle Abgasturbolader (4,5) wirkenden Ladedrucksteller (15) als Steller für die zugeführte Luft,
- ein Verfahren zur Ladedruckregelung (16) als Verfahren zur Regelung der zugeführten Luft und
- ein Verfahren zur Ladedrucksteuerung (24) als Verfahren zur Steuerung der zugeführten Luft vorgesehen sind.

## Claims

1. A fault-detection device (23) for a turbocharged internal-combustion engine (1) with
- at least two exhaust-system branches (21, 22) and exhaust turbochargers (4, 5) arranged in the exhaust-system branches (21, 22),
- a common device (3) for determining the supplied air (**ml**) as a control variable,
- a setting means (15) - acting upon all the exhaust turbochargers (4, 5) - for the supplied air,
- a regulator (16) for the supplied air, which sets the value of the supplied air (**ml**) against a nominal value by actuating the setting means (15),
- a control (24) for the supplied air, which actuates the setting means (15) as a function of operating variables of the internal-combustion engine (1),
wherein the fault-detection device changes over from an actuation of the setting means (15) by the regulator (16) to an actuation by the control if it detects a fault on one side in one of the exhaust-system branches (21, 22).

2. A fault-detection device according to Claim 1, **characterized in that** in order to detect a fault in one of the exhaust-system branches (21, 22) the occurrence of misfirings on the internal-combustion engine (1) is monitored, and a fault is detected if misfirings at the cylinders associated with one of the exhaust-system branches have a build-up.

3. A fault-detection device according to Claim 1 or 2, **characterized in that**
- the supplied air is determined as an air mass (**ml**),
- the device for determining the supplied air is constructed in the form of an air-mass measuring means (3),
- the setting means for the supplied air is constructed in the form of a boost-pressure setting means (15) acting upon all the exhaust turbochargers (4, 5),
- the regulator is constructed in the form of an air-mass regulator (16) which sets the value of the air mass (**ml**) against a nominal value by actuating the boost-pressure setting means,
- the control is constructed in the form of an air-mass control (24) which actuates the boost-pressure setting means as a function of operating variables of the internal-combustion engine (1).

4. A fault-detection device according to Claim 1 or 2, **characterized in that**
- the supplied air is determined as a boost pressure,
- the device for determining the supplied air is constructed in the form of a boost-pressure transmitter,
- the setting means for the supplied air is constructed in the form of a boost-pressure setting means (15) acting upon all the exhaust turbochargers (4, 5),
- the regulator is constructed in the form of a boost-pressure regulator which sets the value of the boost pressure against a nominal value by actuating the boost-pressure setting means, and
- the control is constructed in the form of a boost-pressure control which actuates the boost-pressure setting means as a function of operating variables of the internal-combustion engine (1).

5. A method of detecting a fault in a turbocharged internal-combustion engine (1) with
- at least two exhaust-system branches (21, 22) and exhaust turbochargers (4, 5) arranged in the exhaust-system branches (21, 22),
- a common device (3) determining the supplied air (**ml**) as a control variable,
- a setting means (15) - acting upon all the exhaust turbochargers (4, 5) - for the supplied air,
- a method of regulating (16) the supplied air, which sets the value of the supplied air (**ml**) against a nominal value by actuating the setting means (15),
- a method of controlling (24) the supplied air, which actuates the setting means (15) as a function of operating variables of the internal-combustion engine (1),
with the steps
establishing whether a fault is present on one side in one of the exhaust-system branches (21, 22), and
- determining the setting value for actuating the setting means (**tv**) by the method of regulating the supplied air if no fault is present, and
- determining the setting value for actuating the boost-pressure setting means (**tv**) by the method of controlling the supplied air if a fault is present.

6. A method according to Claim 3 [sic], **characterized in that**, in order to establish whether a fault is present on one side in one of the exhaust-system branches (21, 22), the following steps are carried out;
- detecting misfirings of the engine,
- determining the frequency of misfirings of the engine at individual exhaust-system branches (21, 22), and
- establishing that a fault is present on one side in one of the exhaust-system branches (21, 22) when the frequency exceeds a pre-set threshold value.

7. A method according to Claim 5 or 6, **characterized in that** in the turbocharged internal-combustion engine (1)
- a common air-mass measuring means (3) is provided as a device for determining the supplied air,
- a boost-pressure setting means (15) acting upon all the exhaust turbochargers (4, 5) is provided as a setting means for the supplied air,
- a method of air-mass regulation (16) is provided as a method of regulating the supplied air, and
- a method of air-mass control (24) is provided as a method of controlling the supplied air.

8. A method according to Claim 5 or 6, **characterized in that** in the turbocharged internal-combustion engine (1)
- a common boost-pressure transmitter is provided as a device for determining the supplied air,
- a boost-pressure setting means (15) acting upon all the exhaust turbochargers (4, 5) is provided as a setting means for the supplied air,
- a method of boost-pressure regulation (16) is provided as a method of regulating the supplied air, and
- a method of boost-pressure control (24) is provided as a method of controlling the supplied air.

## Revendications

1. Dispositif de détection de défaut (23) pour un moteur à combustion interne (1) à suralimentation par turbocompresseur comportant
- au moins deux lignes de gaz d'échappement (21, 22) et des turbocompresseurs de gaz d'échappement (4, 5) disposés dans les lignes de gaz d'échappement (21, 22),
- un dispositif (3) commun destiné à enregistrer l'air alimenté (ml) en tant que grandeur de régulation,
- un organe de réglage (15) agissant sur tous les turbocompresseurs de gaz d'échappement (4, 5) pour l'air alimenté,
- un régulateur (16) pour l'air alimenté, qui, par commande de l'organe de réglage (15) fait que la valeur de l'air alimenté (ml) suit une valeur de consigne,
- une commande (24) pour l'air alimenté qui commande l'organe de réglage (15) en fonction des grandeurs de service du moteur à combustion interne (1),
le dispositif de détection de défaut passant d'une commande de réglage (15) assurée par le régulateur (16) à une commande assurée par la commande, lorsqu'il détecte unilatéralement un défaut dans l'une des lignes de gaz d'échappement (21, 22).

2. Dispositif de détection de défaut selon la revendication 1, caractérisé en ce que pour détecter un défaut dans l'une des lignes de gaz d'échappement (21, 22) on contrôle l'apparition de ratés du moteur à combustion interne (1) et un défaut est reconnu lorsque des ratés s'accumulent dans les cylindres affectés à l'une des lignes de gaz d'échappement.

3. Dispositif de détection de défaut selon la revendication 1 ou 2, caractérisé en ce que
- l'air alimenté est déterminé en tant que masse d'air (ml),
- le dispositif de détection de l'air alimenté est réalisé en tant que dispositif de mesure (3) de la masse d'air,
- l'organe de réglage de l'air alimenté est réalisé en tant qu'organe de réglage de pression d'admission (15) agissant sur tous les turbocompresseurs de gaz d'échappement (4, 5),
- le régulateur est réalisé en tant que régulateur de masse d'air (16) qui fait que, par commande de l'organe de réglage de pression d'admission, la valeur de la masse d'air (ml) suit une valeur de consigne, et
- la commande est réalisée en tant que commande de masse d'air (24) qui commande l'organe de réglage de pression d'admission en fonction des grandeurs de service du moteur à combustion interne (1).

4. Dispositif de détection de défaut selon la revendication 1 ou 2, caractérisé en ce que
- l'air alimenté est déterminé en tant que pression d'admission,
- le dispositif de détection de l'air alimenté est réalisé en tant que capteur de pression d'admission,
- l'organe de réglage de l'air alimenté est réalisé en tant qu'organe de réglage de pression d'admission (15) agissant sur tous les turbocompresseurs de gaz d'échappement (4, 5),
- le régulateur est réalisé en tant que régulateur de pression d'admission qui fait que, par commande de l'organe de réglage de pression d'admission, la valeur de la pression d'admission suit une valeur de consigne, et
- la commande est réalisée en tant que commande de pression d'admission qui commande l'organe de réglage de pression d'admission en fonction de grandeurs de service du moteur à combustion interne (1).

5. Procédé de détection d'un défaut dans un moteur à combustion interne (1) à suralimentation par turbocompresseur comportant
- au moins deux lignes de gaz d'échappement (21, 22) et des turbocompresseurs de gaz d'échappement (4, 5) disposés dans les lignes de gaz d'échappement (21, 22),
- un dispositif commun (3) destiné à enregistrer l'air alimenté (ml) en tant que grandeur de régulation,
- un organe de réglage (15) de l'air alimenté, agissant sur tous les turbocompresseurs de gaz d'échappement (4, 5),
- un procédé de régulation (16) de l'air alimenté qui fait que, par commande de l'organe de réglage (15), la valeur de l'air alimentée (ml) suit une valeur de consigne,
- un procédé de commande (24) de l'air alimenté qui commande l'organe de réglage (15) en fonction de grandeurs de service du moteur à combustion interne (1),
présentant les étapes suivantes:
- constat que l'on est en présence d'un défaut unilatéral dans l'une des lignes de gaz d'échappement (21, 22), et
- détermination de la valeur de réglage pour la commande de l'organe de réglage (v, t) par le procédé de régulation de l'air alimenté, lorsqu'aucun défaut n'est constaté, et
- détermination de la valeur de réglage pour la commande de l'organe de réglage de pression d'admission (tv) par le procédé de commande de l'air alimenté, lorsqu'on est en présence d'un défaut.

6. Procédé selon la revendication 3, caractérisé en ce que pour constater si l'on est en présence d'un défaut unilatéral dans l'une des lignes de gaz d'échappement (21, 22), les étapes suivantes sont exécutées :
- détection de ratés du moteur,
- détermination de la fréquence des ratés du moteur sur certaines lignes de gaz d'échappement (21, 22), et
- constat qu'on est en présence d'un défaut unilatéral dans l'une des lignes de gaz d'échappement (21, 22), lorsque la fréquence dépasse une valeur limite donnée.

7. Procédé selon la revendication 5 ou 6, caractérisé en ce que dans le moteur à combustion interne (1) à suralimentation par turbocompresseur il est prévu:
- un dispositif de mesure de masse d'air (3) commun en tant que dispositif de détection de l'air alimenté,
- un organe de réglage de pression d'admission (15) agissant sur tous les turbocompresseurs de gaz d'échappement (4, 5) en tant qu'organe de réglage pour l'air alimenté,
- un procédé de régulation de masse d'air (16) en tant que procédé de régulation de l'air alimenté, et
- un procédé de commande de masse d'air (24) en tant que procédé de commande de l'air alimenté.

8. Procédé selon la revendication 5 ou 6, caractérisé en ce que dans le moteur à combustion interne (1) à suralimentation par turbocompresseur il est prévu :
- un capteur de pression d'admission commun en tant que dispositif de détection de l'air alimenté,
- un organe de réglage de pression d'admission (15) agissant sur tous les turbocompresseurs de gaz d'échappement (4, 5) en tant qu'organe de réglage pour l'air alimenté,
- un procédé de régulation de pression d'admission (6) en tant que procédé de régulation de l'air alimenté, et
- un procédé de commande de pression d'admission (24) en tant que procédé de commande de l'air alimenté.
